(19) Europäisches Patentamt
European Patent Office
Office européen des brevets

(11) **EP 4 491 595 A1**

(12) **EUROPEAN PATENT APPLICATION**
published in accordance with Art. 153(4) EPC

(43) Date of publication:
**15.01.2025 Bulletin 2025/03**

(21) Application number: **23766406.5**

(22) Date of filing: **09.02.2023**

(51) International Patent Classification (IPC):
*C03C 17/22* (2006.01)   *B32B 17/06* (2006.01)
*C03C 15/00* (2006.01)

(52) Cooperative Patent Classification (CPC):
**B32B 17/06; C03C 15/00; C03C 17/22**

(86) International application number:
**PCT/JP2023/004427**

(87) International publication number:
**WO 2023/171226 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.03.2022   JP 2022038418**

(71) Applicant: **AGC INC.
Chiyoda-ku,
Tokyo 1008405 (JP)**

(72) Inventors:
• **YASUDA, Kohei
  Tokyo 100-8405 (JP)**
• **HAYASHI, Yasuo
  Tokyo 100-8405 (JP)**

(74) Representative: **Müller-Boré & Partner
Patentanwälte PartG mbB
Friedenheimer Brücke 21
80639 München (DE)**

(54) **WATER-REPELLENT GLASS**

(57)   A water-repellent glass includes a glass substrate having a first surface, and a water-repellent film deposited on the first surface of the glass substrate, wherein the first surface of the glass substrate includes a characteristic region where a part of the glass substrate is an aggregate of granular formations, the characteristic region including granular features seamlessly extending from the glass substrate, wherein when a thickness direction of the glass substrate is referred to as a first direction, a length of the characteristic region in the first direction is within a range of 50-2000 nm, wherein when a straight line LA is drawn perpendicularly to the first direction, the straight line LA includes intersecting parts which intersect a plurality of the granular features included in the characteristic region, and an average length of the intersecting parts is within a range of 20-5000 nm, and wherein at least some of the granular features include a narrowed part where a dimension decreases toward an inner side of the glass substrate.

FIG.2

**Description**

BACKGROUND OF THE INVENTION

The disclosures herein relate to water-repellent glass.

BACKGROUND ART

There are needs for water-repellent glass in various fields such as for glass members for vehicles or for window glass.

Generally, water-repellent glass is manufactured by depositing a rough undercoat film on the surface of a glass substrate, then depositing a water-repellent film on the undercoat film.

For example, PTL 1 discloses that a member constituted by depositing an amorphous alumina film with openings can be used as an undercoat structure of a water-repellent member.

CITATION LIST

PATENT LITERATURE

[PTL 1] Japanese Laid-Open Patent Publication No. H9-202649

SUMMARY OF THE INVENTION

PROBLEMS TO BE SOLVED BY THE INVENTION

Conventional water-repellent glass has a problem that it is weak against friction or scratches. For example, it is known that when conventional water-repellent glass is used for a certain period, it loses its water-repellence often because its undercoat film falls off. Therefore, water-repellent glass having higher antifriction is required.

The present embodiments are made respecting such a background, and the present embodiments aims to provide water-repellent glass having higher antifriction than before.

MEANS OF SOLVING THE PROBLEM

The present embodiments provide water-repellent glass including:

a glass substrate having a first surface; and a water-repellent film deposited on the first surface of the glass substrate, wherein the first surface of the glass substrate includes a characteristic region where a part of the glass substrate is an aggregate of granular formations, the characteristic region including granular features seamlessly extending from the glass substrate,

when a thickness direction of the glass substrate is referred to as a first direction, a length of the characteristic region in the first direction is within a range of 50-2000 nm,

in a top view of the characteristic region, when a straight line LA is drawn perpendicularly to the first direction, in a 1 um × 1 um area in the characteristic region, the straight line LA includes intersecting parts which intersect a plurality of granular features included in the characteristic region, and an average length of the intersecting parts being within a range of 20 nm to 5000 nm, and

at least some of the granular features include a narrowed part whose dimension decreases toward an inner side of the glass substrate.

EFFECTS OF THE INVENTION

The present embodiments can provide water-repellent glass having significantly higher antifriction than conventional ones.

BRIEF DESCRIPTION OF THE DRAWINGS

[Fig. 1] A drawing illustrating typically one example of a cross section structure of water-repellent glass of one embodiment of the present disclosure.

[Fig. 2] A drawing illustrating magnifying the part A, which is shown in a circle of Fig. 1.

[Fig. 3] A cross section illustrating typically another structure of a characteristic region of water-repellent glass of one embodiment of the present disclosure.

[Fig. 4] A cross section illustrating yet another structure of one embodiment of the present disclosure.

[Fig. 5] A drawing illustrating a typical flow of manufacturing method of water-repellent glass of one embodiment of the present disclosure.

[Fig. 6] A photograph showing one example of a surface pattern of an evaluated region in sample 1.

[Fig. 7] A photograph showing one example of a surface pattern of an evaluated region in sample 2.

[Fig. 8] A photograph showing one example of a surface pattern of an evaluated region in sample 3.

[Fig. 9] A photograph showing one example of a surface pattern of an evaluated region in sample 4.

[Fig. 10] A photograph showing one example of a surface pattern of an evaluated region in sample 11.

[Fig. 11] A photograph showing one example of a surface pattern of an evaluated region in sample 12.

[Fig. 12] A photograph showing one example of a cross sectional pattern of an evaluated region in sample 1.

[Fig. 13] A photograph showing one example of a cross sectional pattern of an evaluated region in sample 2.

[Fig. 14] A photograph showing one example of a cross sectional pattern of an evaluated region in sample 3.

[Fig. 15] A photograph showing one example of a cross sectional pattern of an evaluated region in sample 4.

[Fig. 16] A photograph showing one example of a cross sectional pattern of an evaluated region in sample 11.

[Fig. 17] A photograph showing one example of a cross sectional pattern of an evaluated region in sample 12.

[Fig. 18] A photograph showing one example of a surface pattern of an evaluated region in sample 21.

[Fig. 19] A photograph showing one example of a cross sectional pattern of an evaluated region in sample 21.


MODES FOR CARRYING OUT THE INVENTION

In the following, one embodiment of the present disclosure will be described.

One embodiment of the present disclosure provides water-repellent glass including:

a glass substrate having a first surface; and

a water-repellent film deposited on the surface of the first surface of the glass substrate,

wherein the first surface of the glass substrate includes a characteristic region where a part of the glass substrate is an aggregate of granular formations, the characteristic region including granular features seamlessly extending from the glass substrate,

wherein when a thickness direction of the glass substrate is referred to as the first direction, a length of the first direction of the characteristic region is within a range of 50-2000 nm,

wherein in a top view of the characteristic region, in a 1 um $\times$ 1 um area within the characteristic region, when a straight line LA is drawn perpendicularly to the first direction, the straight line LA includes intersecting parts which intersect a plurality of granular features included in the characteristic region, and an average length of the intersecting parts is within a range of 20 nm to 5000 nm,

wherein at least some of the granular features include a narrowed part whose dimension decreases toward an inner side of the glass substrate.


The water-repellent glass of one embodiment of the present disclosure includes a water-repellent film on a first surface of the glass substrate. Therefore, the water-repellent glass of one embodiment of the present disclosure can realize water-repellence.

Moreover, the water-repellent glass of one embodiment of the present disclosure includes a characteristic pattern on a surface of a water-repellent side of the glass substrate, or the first surface. Concretely, the first surface of the glass substrate includes a characteristic region where a part of the glass substrate is an aggregate of "granular" formations, and the characteristic region includes granular features seamlessly extending from the glass substrate.

Moreover, it is to be noted, that in the present disclosure, "the granular feature" formed in the characteristic region is different from a general "grain", and its root part is connected with the glass substrate seamlessly, and therefore fixed to the glass substrate. More concretely, "the granular feature" is a part which starts from the glass substrate and protrudes seamlessly from the glass substrate.

An average length of "the granular feature" is within a range of 20 nm and 5000 nm. Moreover, as "the granular feature" is different from a general "grain", an averaging method is defined by a method below.

Moreover, in the water-repellent glass, one embodiment of the present disclosure, "the granular features" includes a part whose dimension decreases toward an inner side of the glass substrate, or what is called "a narrowed part".

In the water-repellent glass of one embodiment of the present disclosure, the characteristic region of the first surface of the glass substrate includes such a characteristic pattern.

As mentioned above, conventional water-repellent glass has a problem that it is weak against friction or scratches, that when it is used for a certain period, a water-repellent film disappears as an undercoat film is lost.

On the other hand, an undercoat layer to form roughness is not deposited to the water-repellent glass of one embodiment of the present disclosure. That is, the first surface of the glass substrate itself forms a characteristic region and a water-repellent film is deposited on the characteristic region.

In such a structure, since the characteristic region is formed seamlessly with the glass substrate, different from a structure of depositing separately an undercoat film to a glass substrate, comparably high durability can be realized.

Here, a thickness direction of the glass substrate is referred to as the first direction, and a length along the first direction of the characteristic region is called "thickness of the characteristic region".

In the present disclosure, when the characteristic region is not long enough, that is when thickness of the characteristic region is less than 50 nm, an effective enough characteristic region may not be provided on the first surface. Moreover, when a water-repellent film is deposited on such a characteristic region, water-repellence may not be sufficient. Conversely, when the thickness of the characteristic region is more than 2000 nm, durability of the characteristic region may be lowered, and antifriction of the water-repellent glass may be lowered.

However, in the water-repellent glass of one embodiment of the present disclosure, thickness of the characteristic region is controlled within a range of 50-2000 nm. Therefore, the water-repellent glass of one embodiment of the present disclosure can not only realize sufficient water-repellence but also provide significantly high durability.

Because of such effects above, one embodiment of the present disclosure can provide water-repellent glass with significantly higher antifriction than conventional ones.

(WATER-REPELLENT GLASS OF ONE EMBODIMENT OF THE PRESENT DISCLOSURE)

Next, referring to figures, characteristics of water-repellent glass of one embodiment of the present disclosure are described in detail.

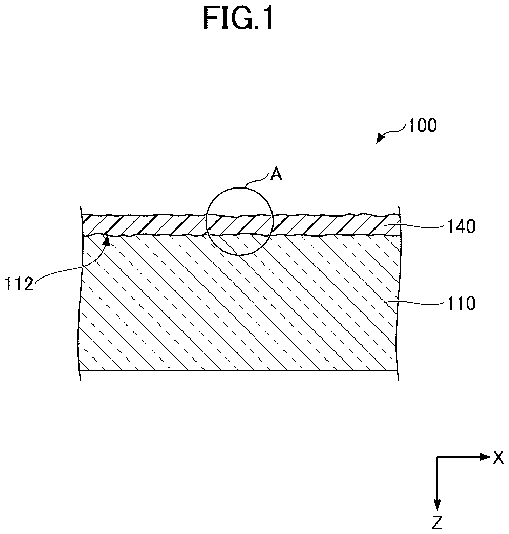

Fig. 1 illustrates typically one example of a cross section structure of water-repellent glass of one embodiment of the present embodiments (hereinafter referred to as "first water-repellent glass").

As shown in Fig. 1, the first water-repellent glass 100 includes a glass substrate 110 and a water-repellent film 140. The glass substrate 110 includes a first surface 112, and the water-repellent film 140 is disposed on the side of the first surface 112 of the glass substrate 110.

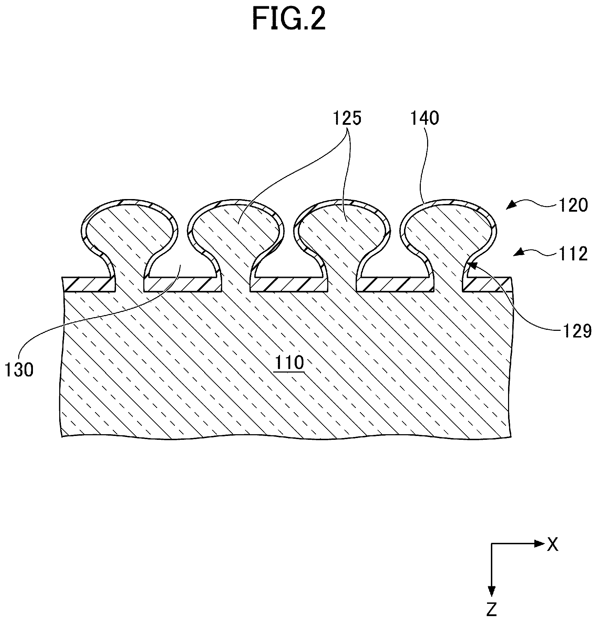

Fig. 2 illustrates a magnified schematic diagram of the part A, which is shown in a circle of Fig. 1.

As shown in Fig. 2, the first surface 112 of the glass substrate 110 includes a characteristic region 120 including many granular features 125.

In an example shown in Fig. 2, the granular feature 125 has a shape of a protrusion protruding against outside from the glass substrate 110.

The granular features 125 are connected with the glass substrate 110 seamlessly, or seamless with the glass substrate 110. That is, on the glass substrate 110, some parts of the first surface 112 protrude to form the granular features 125.

Moreover, in Fig. 2, a space where a part of the glass substrate 110 does not exist, or an opening 130 is formed between neighboring granular features 125.

At least some of the granular features 125 have a mushroom-shaped cross section, instead of a simple cylindrical or conical cross section. That is, some granular features 125 have a narrowed part 129 where a dimension decreases toward an inner side of the glass substrate 110 (the direction Z of Fig. 2).

Particularly, in an example shown in Fig.2, all the granular features 125 have a mushroom-shaped cross section, or have a narrowed part 129.

The granular features 125 are within a range of 20 nm-5000 nm in an average length. Moreover, the average length of the granular features 125 is found by a following method.

First, a straight line LA is drawn in a 1 um $\times$ 1 um area of the characteristic region 120, in a top view of the first water-repellent glass 100.

Next, the granular features 125 intersecting the straight line LA are determined and regarded as selected characteristics. Moreover, a length of a part intersecting the straight line LA (a line segment) is found in each selected characteristic. Length of line segments of each selected characteristic is averaged and average length of the granular features 125 is found.

The average length of the granular feature 125 found in this manner is preferably within a range of 20-1000 nm, more preferably, a range of 20-500 nm.

The water-repellent film 140 is deposited to cover at least the tip of the granular feature 125 in the characteristic region 120. For example, in Fig. 2, the water-repellent film 140 is deposited along the outline of the granular features 125, moreover, on the first surface 112 of the glass substrate 110, it is deposited to cover where the granular features 125 do not exist.

Moreover, a pattern of the characteristic region 120 of the water-repellent glass shown in Fig. 2 is nothing but just one example, and in one embodiment of the present disclosure, a pattern of the characteristic region 120 of the water-repellent glass may be in another structure.

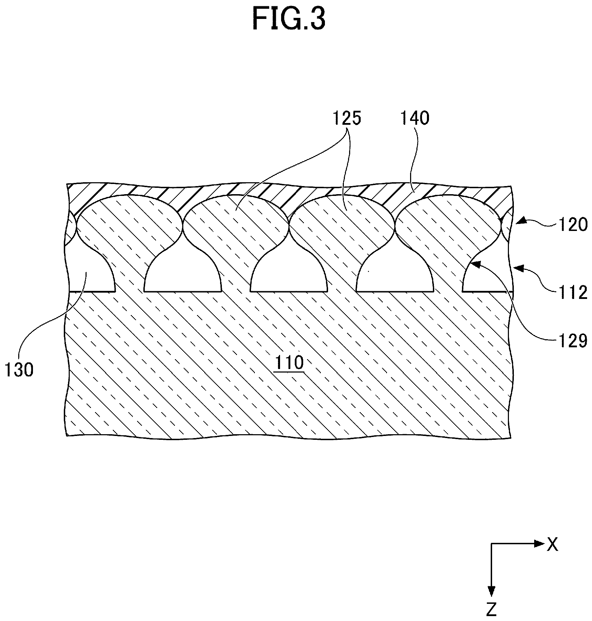

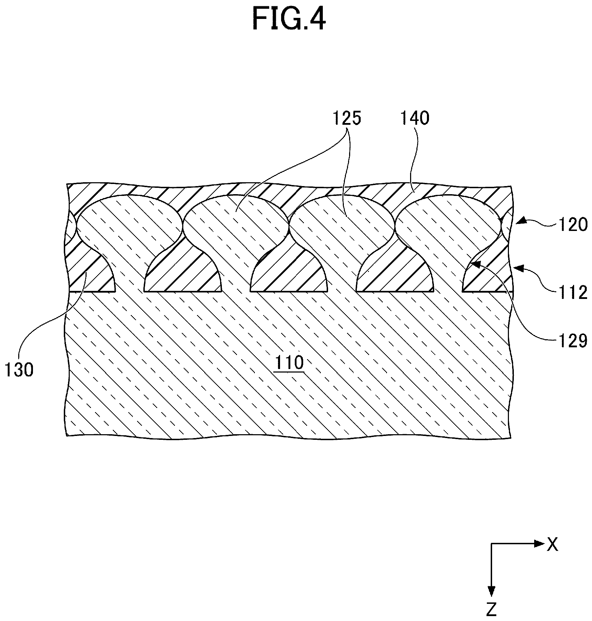

In Fig. 3 and Fig. 4, other structures of the characteristic region 120 of the water-repellent glass of one embodiment of the present disclosure are shown.

In an example shown in Fig. 3, in the characteristic region 120 of the water-repellent glass, neighboring granular features 125 contact each other. Moreover, the water-repellent film 140 is deposited only on the top of each granular feature 125, but not on the narrowed part 129. Therefore, there are no components of the water-repellent film 140 in the openings 130.

Moreover, in an example shown in Fig. 4, the granular features 125 are arranged same as Fig. 3 in the characteristic region 120 of the water-repellent glass. However, the water-repellent film 140 is deposited on the narrowed parts 129 of the granular features 125, and also in the openings 130.

Thus, in one embodiment of the present disclose, the characteristic region 120 of the water-repellent glass can be in various patterns. However, in any patterns, it is required to note that thickness of characteristic regions is within a range of 50 nm-2000 nm, and average length of the granular features is within a range of 20 nm-5000 nm.

(EACH MEMBER INCLUDED IN ONE EMBODIMENT OF THE PRESENT DISCLOSURE OF WATER-REPELLENT GLASS)

Next, each member included in one embodiment of the present disclosure of water-repellent glass is described more in detail. Moreover, as one embodiment of the present disclosure of water-repellent glass, the first water-repellent glass 100 having the above-mentioned structures illustrated in Fig. 1 and Fig. 2 is used as an example to describe characteristics of each member here. Therefore, the reference signs used in Fig. 1 and Fig. 2 are used to refer each member.

(GLASS SUBSTRATE 110)

Composition of the glass substrate 110 is not particularly limited. The glass substrate 110 may be made of, for example, soda-lime glass, soda-lime silicate glass, aluminosilicate glass, borate glass, lithium aluminosilicate glass, quartz glass, borosilicate glass, alkali-free glass, etc.

Moreover, shape and length of the glass substrate 110 is not particularly limited. The glass substrate 110 may be flat plate-shaped, curved shaped, etc. Moreover, size the glass substrate 110 may vary from as large as a window glass of a building, to as small as a camera lens member.

(WATER REPELLENT FILM 140)

Material for the water-repellent film 140 is not limited as far as it has water-repellence.

Moreover, "water-repellence" is a characteristic that water contact angle $\theta$ is 90° or more.

The water-repellent film 140 may be, for example, a fluorine-containing silane compound or the like.

Thickness of the water-repellent film 140 is, for example, in a range of 0.5 nm-50 nm.

Moreover, in the present disclosure, the thickness of the water-repellent film 140 is thickness excluding the water-repellent film part filled in the part of the opening 130 of the characteristic region 120, and found by averaging of thickness of at least 10 the water-repellent films 140 deposited on the top of respective granular features 125.

(OTHER CHARACTERISTICS)

In the first water-repellent glass 100, the water contact angle $\theta$ of the side of the water-repellent film 140 is, for example, 120° or more. The contact angle $\theta$ is preferably 125° or more, more preferably 130° or more, and much more preferably 135° or more.

Moreover, in the first water-repellent glass 100, when the concentration of fluorine at the first surface 112 of the glass substrate 110 is referred to as $F_1$ (at%), and the fluorine concentration of the bulk of the glass substrate 110 is referred to as $F_2$ (at%), ($F_1 - F_2$) may be 3 at% or more.

The first water-repellent glass 100, which includes the glass substrate 110 in whose surface fluorine is "concentrated", can lower a refractive index significantly. Moreover, by this means, water-repellent glass with reflection preventing function can be provided.

In one example, the first water-repellent glass 100 is, as described later, manufactured through a vapor etching process with a fluorine-containing compound. Therefore, through one embodiment of the present disclosure, water-repellent glass whose ($F_1 - F_2$) is 3 at% or more, can be obtained comparably easily.

Water-repellent glass of one embodiment of the present disclosure can be applied to various uses, for example window glass of buildings, glass members of vehicles, camera parts, sensor parts, etc.

(WATER-REPELLENT GLASS MANUFACTURING METHOD BY ONE EMBODIMENT OF THE PRESENT DISCLOSURE)

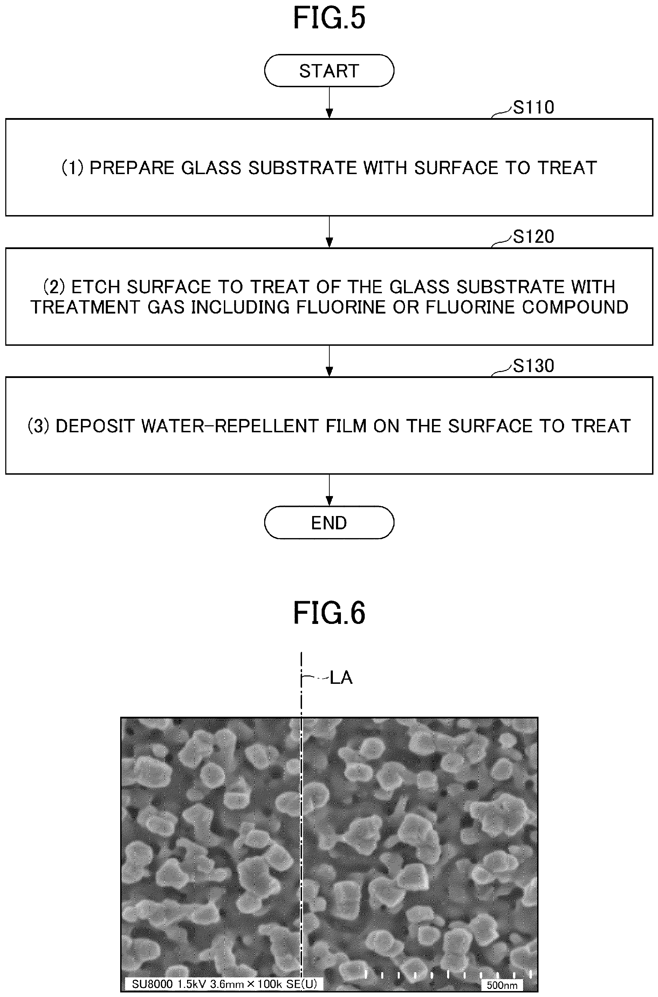

Next, referring to Fig. 5, one example of water-repellent glass manufacturing method by one embodiment of the present disclosure is described.

Fig. 5 shows a typical flow of manufacturing method of water-repellent glass of one embodiment of the present disclosure (referred to as "the first method" below).

As shown in Fig. 5, the first method includes:

(1) a process of preparing a glass substrate having a surface to treat (process S110),
(2) a process of etching the surface to treat of the glass substrate (process S120), and
(3) a process of depositing a water-repellent film on the surface to treat (process S130).

Each process is described in detail below.

(PROCESS S110)

First, a glass substrate having a surface to treat is prepared.

Composition of the glass substrate is not particularly limited. The glass substrate may be made of, for example, soda-lime glass, soda-lime silicate glass, aluminosilicate glass, borate glass, lithium aluminosilicate glass, quartz glass, borosilicate glass, alkali-free glass, etc.

The surface to treat of the glass substrate is cleaned before the next process (process S120).

The cleaning treatment is performed to remove contaminants and/or oil etc. adhered on the surface to treat of the glass substrate, and to clean the surface to treat.

A condition of the cleaning treatment is not particularly limited as far as the surface to treat is cleaned. The cleaning treatment may be performed, for example, in the order of (i) ultrasonic cleaning with a solution including an alkali cleaner, (ii) ultrasonic cleaning with ultrapure water, and (iii) ozone cleaning. As an alkali cleaner, sodium hydroxide and the like may be used.

By cleaning the surface to treat of the glass substrate, after the next process S120, the surface to treat having the above-mentioned characteristic region can be obtained wholly, evenly, and uniformly.

Moreover, the surface to treat of the glass substrate is not always required to be the entirety of one surface of the glass substrate (e.g., the first substrate), but may be some part of the first surface. In this case, the following process S120 may be performed after masking the glass substrate excluding the surface to treat.

(PROCESS S120)

Next, etching treatment is performed on the cleaned surface to treat of the glass substrate, with treatment gas.

Treatment gas includes fluorine or a fluorine compound. For example, treatment gas may include hydrogen fluoride gas or fluorine gas.

Treatment gas may, moreover, include carrier gas. As carrier gas, although not limited, for example, nitrogen and/or argon are used. Concentration of the fluorine compound in the treatment gas is, for example, 0.1-10 vol%, preferably 0.5-8 vol%, and more preferably 1-5 vol%.

The etching treatment is usually performed in a normal pressure air atmosphere.

Temperature of the etching treatment is not particularly limited. Treatment temperature is, for example, within a range of 250-650°C, preferably within a range of 275-600 °C, more preferably within a range of 300-600 °C.

By exposing to the treatment gas, the surface to treat of the glass substrate is etched. As a result, a characteristic region having the above-mentioned characteristic is formed on the surface to treat. That is, the characteristic region including a plurality of granular features formed seamlessly with the glass substrate and extending from the glass substrate is formed.

(PROCESS S130)

Next, a water-repellent film is formed on a characteristic region of a glass substrate.

Material for the water-repellent film is not limited as far as it has water-repellence.

The water-repellent film may be, for example, a fluorine-containing silane compound and the like.

A method of forming the water-repellent film is not particularly limited. The water-repellent film may be deposited on the characteristic region of the glass substrate by, for example, vapor deposition, application (including application by a brush and by a spray), immersion, etc.

When necessary, the glass substrate may be dried after the water-repellent film is formed.

By processes above, the water-repellent glass having a water-repellent film on the characteristic region of the glass substrate can be manufactured.

[EMBODIMENTS]

Next, embodiments of the present disclosure are described. In the following description, example 1-example 4 are embodiments and example 11-example 12 are comparative examples. Moreover, example 21 is an embodiment.

(EXAMPLE 1)

Water-repellent glass is manufactured according to the above-mentioned first method.

A 50 mm long × 50 mm wide × 1 mm thick flat soda-lime glass is used for the glass substrate.

A glass substrate is cleaned by the following processes:

(i) first, a glass substrate is cleaned by ultrasound for 15 minutes with alkali cleaner, or a solution including PK-LCG23 of Parker Corporation;
(ii) next, the glass substrate is cleaned by ultrasound for 15 minutes with ultrapure water;
(iii) finally, the glass substrate is cleaned for 15 minutes by ozone.

Next, a 50 mm long × 50 mm wide surface (the first surface) of the cleaned glass substrate is etched by treatment gas. A gas mixture of nitrogen gas and hydrogen fluoride gas is used for the treatment gas. Concentration of hydrogen fluoride in the gas mixture is 3 vol%. A flow of the treatment gas is 70 SLM (Standard Little per Minits). Treatment temperature is 675 °C and treatment time is 3 seconds.

Next, a water-repellent film (SurfClear300; produced by Canon Optron, Inc.) is deposited by vapor deposition. Thickness of the water-repellent film is aimed to be 10 nm.

By this means, the water-repellent glass (referred to as "sample 1" below) is manufactured.

(EXAMPLE 2-EXAMPLE 4)

A water-repellent glass is manufactured by the method of the example 1. However, in the example 2-example 4, the etching condition of a glass substrate is different from the example 1. Other conditions are same as the example 1.

The water-repellent glass obtained in the example 2-4 are referred to as "sample 2-4", respectively.

(EXAMPLE 11)

A water-repellent film is deposited on the surface to treat of a glass substrate by the method of the example 1. However, in the example 11, etching treatment with hydrogen fluoride gas is not performed for the glass substrate. That is, the water-repellent film is deposited on the first surface of the glass substrate only after cleaning.

The water-repellent glass obtained in the example 11 is referred to as "sample 11".

(EXAMPLE 12)

A water-repellent glass is manufactured by the method of the example 1. However, in the example 12, the etching condition of a glass substrate is different from the example 1. Other conditions are same as the example 1.

The water-repellent glass obtained in the example 12 is referred to as "sample 12".

Gas etching conditions of each example are shown in the following table 1.

[Table 1]

| Example | Gas Etching Conditions | | |
|---------|------------------------|---|---|
|         | Treatment Temperature (°C) | HF Concentration (vol%) | Treatment Time (second) |
| 1 | 675 | 3 | 3 |
| 2 | 725 | 20 | 4.5 |

(continued)

| Example | Gas Etching Conditions | | |
|---|---|---|---|
| | Treatment Temperature (°C) | HF Concentration (vol%) | Treatment Time (second) |
| 3 | 500 | 1 | 10 |
| 4 | 650 | 1 | 10 |
| 11 | - | - | - |
| 12 | 650 | 1 | 3 |

(EVALUATION)

The following evaluation is carried out by using each sample.

(CHARACTERISTIC REGION EVALUATION)

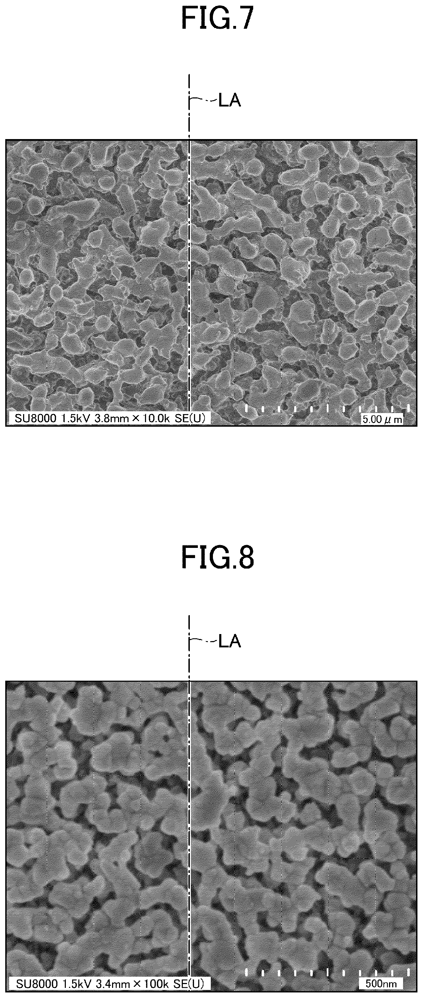

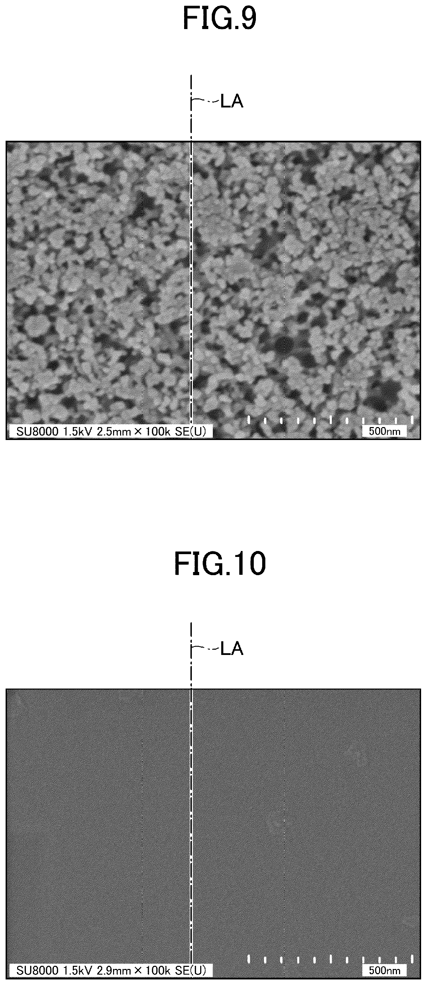

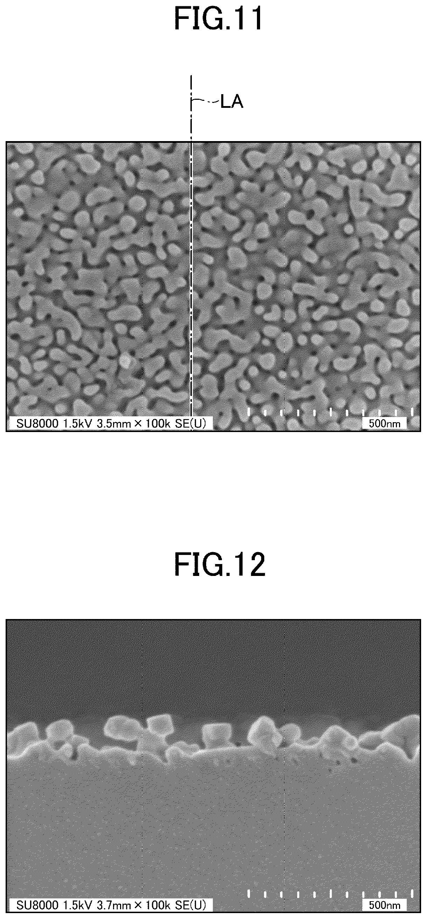

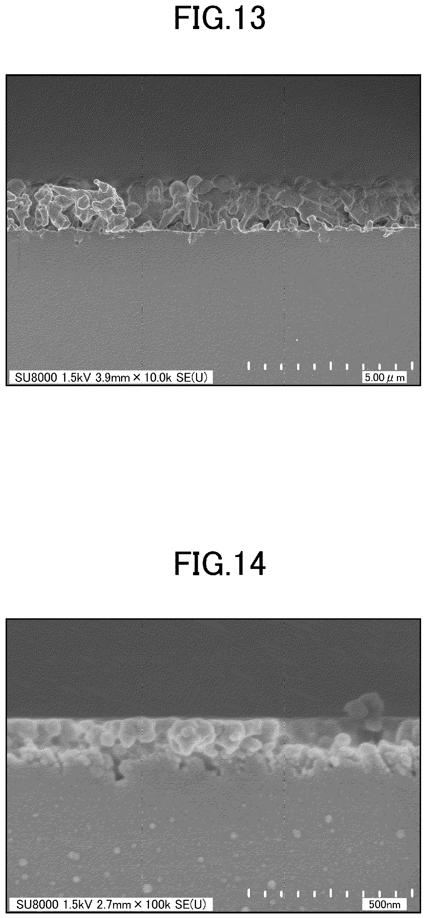

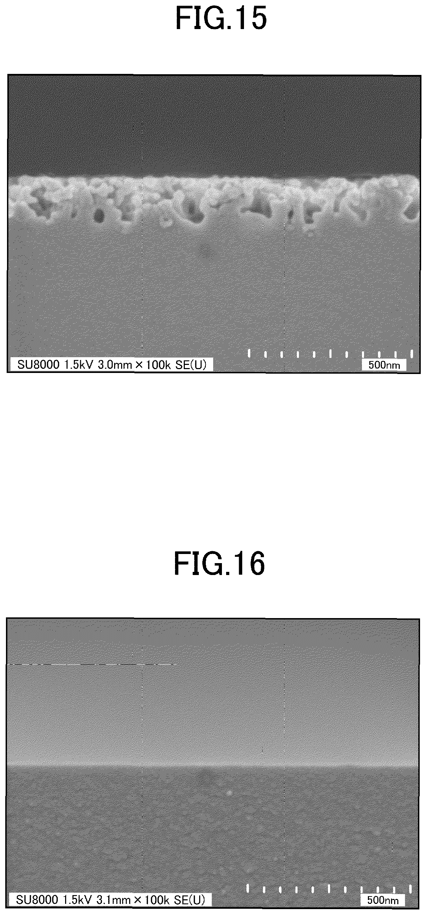

A pattern of the side of a water-repellent film (referred to as "evaluated region" below) of each sample is observed by a scanning electron microscope (SEM).
Examples of the surface patterns of the evaluated regions in the samples 1-4 and samples 11-12 are shown in Fig. 6-Fig. 11, respectively.
These figures show that many granular features are formed in the evaluated region of the samples 1-4 and 11. That is, characteristic regions, which includes the above-mentioned characteristics are formed in the evaluated regions.
Moreover, Fig. 10 shows that granular features are not seen in the evaluated region, therefore, the characteristic region does not exist in the sample 11.
From Fig. 6-Fig 9 and Fig. 11, by the above-mentioned method, an average length of the granular features of each sample is found. Straight lines LA seen in Fig. 6-Fig. 9 and Fig.11 are the straight lines drawn when the average length of the granular features is found.
As a result of measurements, the average length of the granular features is within a range of 20 nm-800 nm in any sample.
Next, examples of cross sections of the evaluated regions in the samples 1-4 and samples 11-12 are shown in Fig. 12-Fig. 17, respectively.
Fig. 12-Fig. 15 show that many granular features are formed in the evaluated region (i.e. characteristic region) of the samples 1-4. Particularly, in the samples 1-4, it is observed that some granular features include narrowed parts, therefore, there are many openings in the characteristic region.
Moreover, Fig. 16 shows that granular features are not seen in the evaluated region, and as mentioned above, the characteristic region does not exist in the sample 11.
Moreover, according to the patterns shown in Fig. 12-Fig. 15, some granular features are connected with the surface of the glass substrate seamlessly, or seamless with the glass substrate.
From Fig. 12-Fig. 15 and Fig. 17, thickness of the characteristic regions of each sample are measured.
As a result, thickness of the characteristic region is within a range of 100 nm-1600 nm in the samples 1-4. On the other hand, in sample 12, thickness of the characteristic region is about 45 nm, that is the characteristic region is not formed to the sufficient length.

(CONTACT ANGLE MEASUREMENT)

Contact angles $\theta$ are measured by dripping waterdrop to the side of a water-repellent film in each sample.
According to the result of the measurement, the contact angles $\theta$ are 90° or more in any sample, and every sample shows water-repellence.
However, with respect to both of the contact angles $\theta$ of samples 11-12 being 114°, the contact angles $\theta$ of the samples 1-4 are 135° or more. Particularly, in the sample 2, the contact angle $\theta$ is more than 155° and the sample 2 shows high water-repellence.

(TOTAL LIGHT TRANSMITTANCE MEASUREMENT)

Total light transmittance is measured in each sample. Measurement is performed according to JIS K7361, where transmittance of light, entering from the side of the water-repellent film, and emitted from the side of the glass substrate, is measured.

According to the result of measurement, the total light transmittance of the samples 1-4 is at least more than 87%; thus, the samples 1-4 were understood to high transmittance.

(ANTIFRICTION EVALUATION)

An antifriction evaluation test was performed for each sample.

The test is performed as below: 1 cm × 1 cm cloth is contacted on the surface of the side of the water-repellent film of each sample; applying 500 g of load to the cloth, the cloth is moved by cm horizontally, then, moved to the opposite direction same distance; the above is repeated 5000 times; then, a contact angle of the sample is measured.

When the contact angle $\theta$ after the test is 120° or more, and the difference with before the test is 10° or less, the antifriction is judged to be good. Otherwise, the antifriction of the sample is judged to be bad.

As a result of tests, the sample 1, the sample 3, and the sample 4 showed good antifriction.

(FLUORINE CONCENTRATION EVALUATION)

Fluorine concentration (F1) on the first surface of each sample is measured. An X-ray photoelectron spectroscopy (XPS) analyzer, PHI Quantera II (produced by ULVAC-PHI, Inc.) is used for the measurement.

Difference of fluorine concentration $(F_1 - F_2)$ (at%) is found from the obtained result. As mentioned above, here, $F_2$ refers to the fluorine concentration of the bulk of the glass substrate.

In the following table 2, the results of the evaluation obtained from each sample are shown.

[Table 2]

| Example | Evaluation Results | | | | | |
|---|---|---|---|---|---|---|
| | Average Size of Granular Features (nm) | Thickness of Characteristic Region (nm) | Contact Angle $\theta$ (°) | Total Light Transmittance (%) | Antifriction | $F_1$-$F_2$ (at%) |
| 1 | 82 | 140 | 135 | 94.3 | ○ | 21 |
| 2 | 791 | 1600 | 155 | 87.3 | - | 9 |
| 3 | 119 | 110 | 135 | 94.6 | ○ | 35 |
| 4 | 29 | 140 | 138 | 95.5 | ○ | 32 |
| 11 | - | 0 | 114 | 91.6 | × | 0 |
| 12 | 72 | 45 | 114 | 92.1 | × | 16 |

According to the result of the evaluation above, it is confirmed that the water-repellent glass including the characteristic region such as sample 1-sample 4 shows good water-repellence and good antifriction. to the following method.

A 50 mm long × 50 mm wide × 1 mm thick flat soda-lime glass is used for the glass substrate. The glass substrate is used after cleaning same as the example 1.

Next, as per the following, atmospheric pressure plasma etching treatment is performed against a 50 mm long × 50 mm wide surface (the first surface).

A microwave plasma system apparatus with a RF generator as a plasma apparatus was used.

The present plasma apparatus includes ceramic tubes including electrodes connected with the RF generator and argon (Ar) gas is supplied into the ceramic tubes. Moreover, source gas is supplied around the ceramic tubes. The source gas is a mixture gas of argon and tetrafluoromethane $(CF_4)$ (Ar : $CF_4$ (volume ratio) = 1000 : 150).

When working, 2.45 GHz microwave voltage is applied from the RF generator to the electrodes. By this means, plasma is made from the argon gas flowing in the ceramic tubes. Moreover, this plasma decomposes $CF_4$ included in the mixture gas at the exit of the plasma tubes (plasma head).

Fluorine radicals (F*) produced through the resolution of $CF_4$ react on components included in the glass substrate, as per the following reaction formulae:

$$nAr* + 2CF_4 \rightarrow 8F* + C_2* + nAr \quad (Math. 1)$$

$$SiO_2 + 4F^* \rightarrow SiF_4 + O_2 \qquad (Math. 2)$$

Low-melting components, such as silicon tetrafluoride, produced by the reaction, volatilize by heat.

Therefore, by installing a glass substrate below the plasma head and performing the atmospheric pressure plasma etching, the first surface of the glass substrate can be etched.

In the present example, distance between the plasma head and the first surface of the glass substrate in the atmospheric pressure plasma etching is 18 mm.

Moreover, scanning speed of the plasma head is 8 mm/s. The scanning direction of the plasma head is the direction parallel to one side of the first surface of the glass substrate (first side). After scanning the plasma head from one edge of the first surface to the other edge (outward scanning), in the same mode, scanning along the direction parallel to the first side (inward scanning) is performed after moving the head 4 mm (pitch = 4 mm) parallel to one side intersecting the first side (second side), then processes above are repeated. By this means, the plasma treatment is performed for the whole surface of the first surface of the glass substrate.

The glass substrate temperature during the treatment is 500 °C.

Subsequently, by the same method as the example 1, a water-repellent film (SurfClear300; produced by Canon Optron, Inc.) is deposited by vapor deposition. Thickness of the water-repellent film is aimed to be 10 nm.

By this means, a water-repellent glass (referred to as "sample 21" below) is prepared.

(RESULT EVALUATION)

The evaluation is performed using the sample 21.

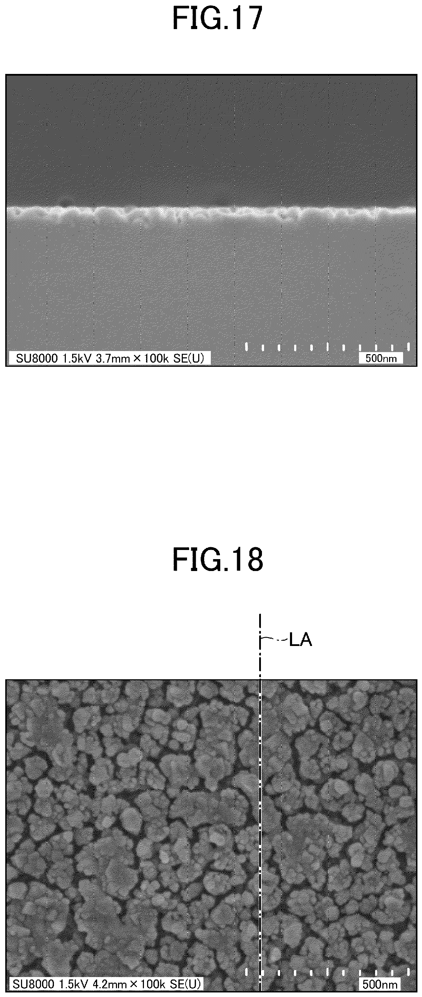

One example of the surface pattern of the evaluated region in the sample 21 is shown in Fig. 18 .

Fig. 18 shows that many granular features are formed in the evaluated region in the sample 21. That is, it was understood that the characteristic region having the features in the evaluated region was formed.

Average length of the granular features of each sample is found from Fig. 18 by the method. A straight line LA seen in Fig. 18 is the straight line drawn when average length of the granular features was found.

As a result of measurements, the average length of the granular features is 118 nm in the sample 21.

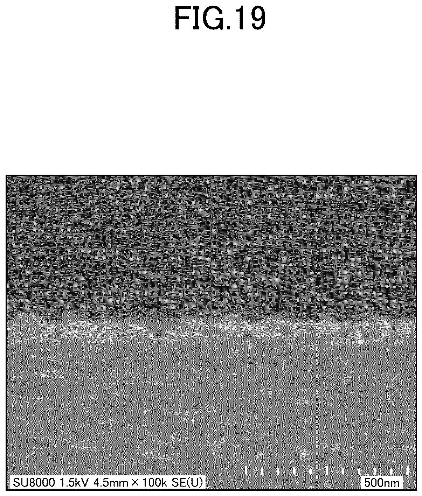

Fig. 19 shows one example of a cross section of the evaluated regions in the sample 21.

Fig. 19 shows that many granular features are formed in the evaluated region (i.e., the characteristic region) in the sample 21. Narrowed parts are observed in some granular features, therefore there are many openings in the characteristic region.

Moreover, a pattern illustrated in Fig. 19 shows that some granular features are connected with the surface of the glass substrate seamlessly, or formed seamlessly with the glass substrate.

Thickness of the characteristic region in the sample 21 is measured from Fig. 19. As a result, the thickness of the characteristic region of the sample 21 is 66 nm.

The following table 3 shows all the results of the evaluation.

[TABLE 3]

| Example | Evaluation Results | | | | | |
| --- | --- | --- | --- | --- | --- | --- |
| | Average Size of Granular Features (nm) | Thickness of Characteristic Region (nm) | Contact Angle $\theta$ (°) | Total Light Transmittance (%) | Antifriction | $F_1$-$F_2$ (at%) |
| 21 | 118 | 66 | 142 | 92.2 | ○ | 19 |

According to the result above, it is confirmed that the sample 21 shows good water-repellence and good antifriction.

The present application is based on and claims priority to Japanese patent application No. 2022-038418 filed on 11th, March, 2022 with the Japanese Patent Office, and the entire contents of Japanese patent application No. 2022-038418 are hereby incorporated by reference.

REFERENCE SIGNS LIST

100    water-repellent glass

110    glass substrate
112    first surface
120    characteristic region
125    granular feature
129    narrowed part
130    opening
140    water-repellent film

**Claims**

1.  A water-repellent glass comprising:

    a glass substrate having a first surface; and
    a water-repellent film deposited on the first surface of the glass substrate,
    wherein the first surface of the glass substrate includes a characteristic region where a part of the glass substrate is an aggregate of granular formations, the characteristic region including granular features seamlessly extending from the glass substrate,
    wherein when a thickness direction of the glass substrate is referred to as a first direction, a length of the characteristic region in the first direction is within a range of 50-2000 nm,
    wherein in a top view of the characteristic region, in a 1 um × 1 um area within the characteristic region, when a straight line LA is drawn perpendicularly to the first direction, the straight line LA includes intersecting parts which intersect a plurality of the granular features included in the characteristic region, and an average length of the intersecting parts is within a range of 20 nm to 5000 nm, and
    wherein at least some of the granular features include a narrowed part where a dimension decreases toward an inner side of the glass substrate.

2.  The water-repellent glass according to claim 1, wherein a difference $(F_1 - F_2)$ between a concentration $F_1$ of fluorine at the first surface, and a fluorine concentration $F_2$ of a bulk of the glass substrate, is 3 at% or more.

3.  The water-repellent glass according to claim 1 or 2, wherein in the water-repellent glass, a water contact angle $\theta$ measured on the water-repellent film is 120° or more.

# FIG.1

# FIG.2

# FIG.3

# FIG.4

# FIG.5

```
         ( START )
             │
             ▼                              ╱S110
┌─────────────────────────────────────────────────┐
│                                                   │
│  (1) PREPARE GLASS SUBSTRATE WITH SURFACE TO TREAT │
│                                                   │
└─────────────────────────────────────────────────┘
             │
             ▼                              ╱S120
┌─────────────────────────────────────────────────┐
│  (2) ETCH SURFACE TO TREAT OF THE GLASS SUBSTRATE WITH │
│  TREATMENT GAS INCLUDING FLUORINE OR FLUORINE COMPOUND │
└─────────────────────────────────────────────────┘
             │
             ▼                              ╱S130
┌─────────────────────────────────────────────────┐
│                                                   │
│  (3) DEPOSIT WATER-REPELLENT FILM ON THE SURFACE TO TREAT │
│                                                   │
└─────────────────────────────────────────────────┘
             │
             ▼
          ( END )
```

# FIG.6

SU8000 1.5kV 3.6mm × 100k SE(U)    500nm

# FIG.7

—LA

SU8000 1.5kV 3.8mm × 10.0k SE(U)          5.00 μm

# FIG.8

—LA

SU8000 1.5kV 3.4mm × 100k SE(U)          500nm

# FIG.9

# FIG.10

# FIG.11

SU8000 1.5kV 3.5mm × 100k SE(U)    500nm

# FIG.12

SU8000 1.5kV 3.7mm × 100k SE(U)    500nm

# FIG.13

SU8000 1.5kV 3.9mm × 10.0k SE(U)    5.00 μ m

# FIG.14

SU8000 1.5kV 2.7mm × 100k SE(U)    500nm

# FIG.15

SU8000 1.5kV 3.0mm × 100k SE(U)    500nm

# FIG.16

SU8000 1.5kV 3.1mm × 100k SE(U)    500nm

# FIG.17

SU8000 1.5kV 3.7mm × 100k SE(U)  500nm

# FIG.18

LA

SU8000 1.5kV 4.2mm × 100k SE(U)  500nm

# FIG.19

SU8000 1.5kV 4.5mm × 100k SE(U)    500nm

## INTERNATIONAL SEARCH REPORT

International application No.

**PCT/JP2023/004427**

### A. CLASSIFICATION OF SUBJECT MATTER

***C03C 17/22***(2006.01)i; ***B32B 17/06***(2006.01)i; ***C03C 15/00***(2006.01)i
FI:   C03C17/22 Z; B32B17/06; C03C15/00 A

According to International Patent Classification (IPC) or to both national classification and IPC

### B. FIELDS SEARCHED

Minimum documentation searched (classification system followed by classification symbols)

C03C15/00-17/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2014/061615 A1 (ASAHI GLASS COMPANY, LIMITED) 24 April 2014 (2014-04-24) paragraphs [0125]-[0126], [0137], table 1, paragraphs [0161]-[0168], [0176]-[0189], drawings | 1-3 |
| A | JP 2011-509192 A (SORTECH AG) 24 March 2011 (2011-03-24) claims, drawings | 1-3 |
| A | WO 2021/137274 A1 (NALUX CO., LTD.) 08 July 2021 (2021-07-08) paragraphs [0046]-[0059], fig. 13-21 | 1-3 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 April 2023** | **25 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| | International application No. |
|---|---|
| | **PCT/JP2023/004427** |

| Patent document cited in search report | Publication date (day/month/year) | Patent family member(s) | Publication date (day/month/year) |
|---|---|---|---|
| WO       2014/061615       A1 | 24 April 2014 | US       2015/0219801       A1<br>paragraphs [0148]-[0149],<br>[0161], table 1, paragraphs<br>[0186]-[0193], [0202]-[0216],<br>drawings<br>CN              104718465       A | |
| JP       2011-509192       A | 24 March 2011 | US       2011/0027506       A1<br>claims, drawings<br>WO       2009/065852       A2<br>CN              101909872       A<br>KR   10-2010-0102109       A | |
| WO       2021/137274       A1 | 08 July 2021 | US       2022/0315482       A1<br>paragraphs [0078]-[0091], fig.<br>13-21 | |

Form PCT/ISA/210 (patent family annex) (January 2015)

**REFERENCES CITED IN THE DESCRIPTION**

**Patent documents cited in the description**

- JP H9202649 A

- JP 2022038418 A